(19) Europäisches Patentamt
European Patent Office
Office européen des brevets

(11) **EP 4 442 737 A1**

(12) **EUROPEAN PATENT APPLICATION**
published in accordance with Art. 153(4) EPC

(43) Date of publication:
**09.10.2024 Bulletin 2024/41**

(21) Application number: **22898206.2**

(22) Date of filing: **14.09.2022**

(51) International Patent Classification (IPC):
*C08J 3/16* (2006.01)     *C08B 16/00* (2006.01)
*C08J 3/02* (2006.01)

(52) Cooperative Patent Classification (CPC):
**C08B 16/00; C08J 3/02; C08J 3/16**

(86) International application number:
**PCT/JP2022/034319**

(87) International publication number:
**WO 2023/095421 (01.06.2023 Gazette 2023/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.11.2021  JP 2021192970**

(71) Applicant: **Daio Paper Corporation
Ehime 799-0492 (JP)**

(72) Inventor: **SASAKI, Hiroto
Shikokuchuo-shi, Ehime 799-0492 (JP)**

(74) Representative: **Meissner Bolte Partnerschaft
mbB
Patentanwälte Rechtsanwälte
Postfach 86 06 24
81633 München (DE)**

(54) **CELLULOSE PARTICLES AND CELLULOSE PARTICLE DISPERSION**

(57)     Cellulose particles which are light in weight and have improved redispersibility in aqueous liquid, as well as dispersion liquid of the cellulose particles are provided. The cellulose particles contain 50 mass% or more fine cellulose fibers having an average fiber diameter of 1000 nm or smaller, and have a packed bulk density of 0.1 to 200 mg/cm$^3$ and an average particle size of 0.1 to 1000 μm.

[FIG.2]

EP 4 442 737 A1

**Description**

FIELD OF ART

The present invention relates to cellulose particles and dispersion liquid of cellulose particles.

BACKGROUND ART

Fine cellulose fibers obtained by making cellulose fibers finer have recently been a subject of researches for applications in various fields due to their low environmental burden, and are expected to be utilized in such fields as plastic materials, cosmetics, clothing, and architecture.

Fine cellulose fibers are usually taken for use in the form of a 5 mass% or lower aqueous dispersion and, when dried, tend to mutually aggregate and form into particles depending on the conditions of storage. Fine cellulose fibers, once formed into particles, tend to maintain the particle state even if introduced into water, and are hardly ready to be redispersed by disintegration of the aggregates or the like.

In this regard, there have developed some techniques focusing on dispersibility of fine cellulose fibers, an example of which is disclosed in Patent Publication 1. Patent Publication 1 discloses a problem to be solved by the invention, which is to provide powdery nanofibers having improved dispersibility in a matrix component, such as resins, and a solution to the problem, which is powdery nanofibers containing a dispersant to which at least one member selected from the group consisting of a P-OH group, a -COOH group, a -SO$_3$H group, and/or metal salt groups thereof and an imidazoline group, is bonded.

Patent Publication 2 discloses a relevant technique, wherein a problem to be solved by the invention is to provide cellulose particles having a smaller diameter, ensured flexibility, and reduced dermal irritation, and a solution to the problem is cellulose particles having an average particle size D50 of 1 $\mu$m or larger and 50 $\mu$m or smaller, a bulk density of 0.30 g/mL or lower, a specific volume of 3.0 mL/g or larger, and a linseed oil absorption of 100 mL/100 g or more.

In the technique disclosed in Patent Publication 1, the matrix component is solid, such as resins, and the technique aims to improve dispersibility of nanofiber powder in solid. This publication does not disclose anything about whether, when the matrix component is aqueous liquid, the aggregates of nanofiber powder are disintegrated and mixed in the aqueous liquid to disperse well.

Further, in Patent Publication 2, use of the cellulose particles as an additive to makeup products is conceived, but no teaching is made as to what is used as a matrix component, and thus no disclosure is made as to dispersibility of the cellulose particles in aqueous liquid. Patent Publication 3 teaches porous cellulose particles with high sphericity, and has little relevance to the problems to be solved by the present invention.

PRIOR ART PUBLICATION

PATENT PUBLICATION

Patent Publication 1: JP 2017-210596 A
Patent Publication 2: JP 2019-206662 A
Patent Publication 3: JP 2020-50840 A

SUMMARY OF THE INVENTION

PROBLEMS TO BE SOLVED BY THE INVENTION

The present invention has been made in view of the foregoing, and it is an object of the present invention to provide cellulose particles having improved redispersibility in aqueous liquid, and dispersion liquid of the cellulose particles.

MEANS FOR SOLVING THE PROBLEMS

The aspect of the invention that solves the above problem is as follows.

<First Aspect>

Cellulose particles containing 50 mass% or more fine cellulose fibers having an average fiber diameter of 1000 nm or smaller,

wherein the cellulose particles have a packed bulk density of 0.1 to 200 mg/cm$^3$, and an average particle size of 0.1 to 1000 $\mu$m.

The cellulose particles according to the above aspect, which contain 50 mass% or more fine cellulose fibers having an average fiber diameter of 1000 nm or smaller, are mainly composed of relatively fine cellulose fibers mutually aggregated. Further, the cellulose particles have a packed bulk density of 0.1 to 200 mg/cm$^3$ and an average particle size of 0.1 to 1000 $\mu$m, and are thus relatively large in size, light in weight, and bulky. It is envisaged that, when such cellulose particles are dispersed in an aqueous dispersion medium, part of the fibers constituting the cellulose particles are disintegrated or the like, to physically form a dispersed state. Thus, the cellulose particles are hard to precipitate when redispersed in aqueous liquid.

EFFECT OF THE INVENTION

According to the present invention, there are provided cellulose particles, which are light in weight and have improved redispersibility in aqueous liquid, and dispersion liquid of the cellulose particles.

BRIEF DESCRIPTION OF THE DRAWINGS

Fig. 1 is an explanatory view of a spray-type freeze granulator.
Fig. 2 is a SEM image of the cellulose particles.
Fig. 3 is a SEM image of the cellulose particles.
Fig. 4 is a SEM image of the cellulose particles.
Fig. 5 is a SEM image of the cellulose particles.

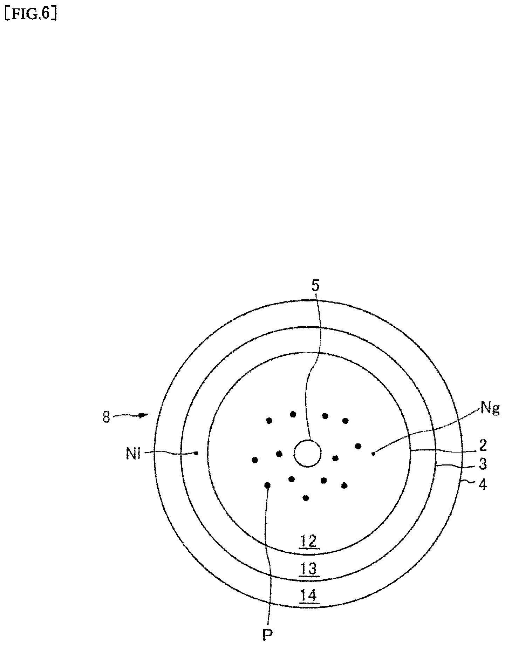

Fig. 6 is a cross-sectional view taken along lines Z-Z in Fig. 1.
Fig. 7 shows the results of the redispersion test.
Fig. 8 is a SEM image of the particles in Comparative Example 1.
Fig. 9 is a side view of a dryer unit according to another embodiment.
Fig. 10 illustrates the dryer unit of Fig. 9 seen from direction Y.

EMBODIMENTS FOR CARRYING OUT THE INVENTION

Next, embodiments for carrying out the present invention will now be explained. Note that these embodiments are mere examples of the present invention, and the scope of the invention is not limited to the scopes of the embodiments.

The cellulose particles according to the present embodiment contains 50 mass% or more fine cellulose fibers having an average fiber diameter of 1000 nm or less, and have a packed bulk density of 0.1 to 200 mg/cm$^3$, and an average particle size of 0.1 to 1000 $\mu$m. Before the cellulose particles, discussion is made about fine cellulose fibers, which are a raw material of the cellulose particles.

<Fine Cellulose Fibers>

The fine cellulose fibers may be obtained by defibrating (making finer) raw material pulp, and may be produced through a commonly known treatment, such as chemical treatment or mechanical treatment.

The raw material pulp for the fine cellulose fibers may be one or more members selected from the group consisting of, for example, wood pulp made from hardwood, softwood, or the like; non-wood pulp made from straw, bagasse, cotton, hemp, bast fibers, or the like; and de-inked pulp (DIP) made from brown waste paper, envelope waste paper, magazine waste paper, leaflet waste paper, corrugated waste paper, hard white waste paper, simili waste paper, ground wood waste paper, recovered used paper, waste paper, or the like. These various raw materials may be in the form of a ground product, such as those referred to as cellulose-based powder. As demands for products containing organic components, which aim at reduction of environmental burden, are recently increasing, wood pulp derived from plants, such as hardwood or softwood, rather than de-inked pulp, is preferred.

As the wood pulp, one or more members may be selected and used from the group consisting of, for example, chemical pulp, such as hardwood kraft pulp (LKP), softwood kraft pulp (NKP), sulfite pulp (SP), and dissolving pulp (DP), and mechanical pulp (TMP). In particular, chemical pulp, such as hardwood kraft pulp (LKP) or softwood kraft pulp (NKP), which is wood pulp containing higher cellulose components, is preferred, and bleached pulp (BKP) is particularly preferred.

As the mechanical pulp, one or more members may be selected and used from the group consisting of, for example, stone ground pulp (SGP), pressurized stone ground pulp (PGW), refiner ground pulp (RGP), chemi-ground pulp (CGP), thermo-ground pulp (TGP), ground pulp (GP), thermomechanical pulp (TMP), chemithermomechanical pulp (CTMP), refiner mechanical pulp (RMP), and bleached thermomechanical pulp (BTMP).

For production of fine cellulose fibers having a relatively small average fiber diameter, it is preferred to use kraft pulp, which is easy to defibrate and highly dispersible. In particular, when the fine cellulose fibers are to be used in white-colored products (emulsions, gel, or the like), it is advantageous that the fine cellulose fibers per se are white in color, and use of LBKP and NBKP is more preferred for improved whiteness.

The fine cellulose fibers may be pretreated prior to defibration. The pretreatment may be, for example, mechanical pre-beating of raw material pulp, or chemical modification of raw material pulp. The manner of pre-beating is not particularly limited, and a known technique may be employed.

Pretreatment of the raw material pulp by a chemical method may be, for example, hydrolysis of polysaccharides with acid (acid treatment), hydrolysis of polysaccharides with enzyme (enzyme treatment), swelling of polysaccharides with alkali (alkali treatment), oxidation of polysaccharides with an oxidizing agent (e.g., ozone) (oxidation treatment), reduction of polysaccharides with a reducing agent (reduction treatment), oxidation in the presence of TEMPO catalyst (oxidation treatment), anionization (anionization treatment) by phosphoesterification, , or cationization (cationization treatment) by carbamation or the like.

As the alkali used in the alkali treatment, for example, sodium hydroxide, lithium hydroxide, potassium hydroxide, an ammonia aqueous solution, or organic alkali, such as tetramethylammonium hydroxide, tetraethylammonium hydroxide, tetrabutylammonium hydroxide, and benzyltrimethylammonium hydroxide may be used. In view of the manufacturing cost, sodium hydroxide is preferably used.

The enzyme treatment, acid treatment, or oxidation treatment may result in a lower water retention, a higher degree of crystallinity, and also higher homogeneity of the fine cellulose fibers. In this regard, fine cellulose fibers having a lower water retention are easily dewatered, which is preferred for easy drying.

The enzyme treatment, acid treatment, or oxidation treatment of the raw material pulp causes decomposition of the amorphous region of hemicellulose and cellulose in pulp, which leads to reduction of energy required for the treatment to make the raw material pulp finer, and to improvement in uniformity and dispersibility of the fine cellulose fibers. Dispersibility of cellulose fibers serves, for example, to improve homogeneity of molded bodies. However, the pretreatment lowers the aspect ratio of fine cellulose fibers, so that it is preferred to avoid excessive pretreatment.

Examples of fine cellulose fibers modified with anionic functional groups introduced therein through anionization may include fine cellulose fibers esterified with phosphorus oxoacid, carbamated fine cellulose fibers, or fine cellulose fibers of which hydroxyl groups in the pyranose rings have directly been oxidized into carboxyl groups.

The fine cellulose fibers modified with anionic functional groups introduced therein have a relatively high dispersibility. This is assumed to be because the anionic functional groups cause locally biased charge, and easily form hydrogen bonding with water or organic solvents in the dispersion liquid.

By subjecting cellulose fibers to esterification with phosphorus oxoacid, which is an example of anionization, the raw material fibers may be made finer to result in fine cellulose fibers having a higher aspect ratio, excellent strength, higher light transmittance, and higher viscosity. The esterification with phosphorus oxoacid may be performed by, for example, the technique disclosed in JP 2019-199671 A. For example, modified fine cellulose fibers obtained by modifying the hydroxyl groups of the cellulose fibers to introduce phosphorous ester groups therein, may be used.

Defibration of cellulose fibers may be performed by means of the following defibration apparatus or method. That is, the defibration may be performed by employing one or more of the means selected and used from, for example, homogenizers, such as high-pressure homogenizers and high-pressure homogenizing apparatus, millstone friction machines, such as grinders and mills, refiners, such as conical refiners and disk refiners, and various bacteria. Defibration of cellulose fibers may preferably be performed by means of apparatus and method wherein the fibers are made finer in water streams, in particular, high pressure water streams. By means of such apparatus and method, significantly high dimensional uniformity and dispersion uniformity may be imparted to the resulting fine cellulose fibers. In contrast, by means of a grinder in which the fibers are ground between rotating grindstones, it is hard to uniformly make the cellulose fibers finer, and some fiber lumps may remain without being defibrated.

The grinder for use in the defibration of cellulose fibers may be, for example, Masscolloider manufactured by MASUKO SANGYO CO., LTD. The apparatus for making cellulose fibers finer in high-pressure water streams may be, for example, Star Burst (registered trademark) manufactured by SUGINO MACHINE LIMITED, or Nanovater (registered trademark) manufactured by YOSHIDA KIKAI CO., LTD. A high-speed rotary homogenizer that may be used in the defibration of cellulose fibers is CLEARMIX-11S manufactured by M TECHNIQUE CO., LTD.

The present inventors have found out that the fibers obtained by defibrating cellulose fibers in high-pressure water streams have more uniform fiber widths, compared, by microscopic observation, to the fibers obtained by defibrating cellulose fibers by grinding between rotating grindstones.

The defibration in high-pressure water streams may preferably be performed by pressurizing dispersion liquid of cellulose fibers in a pressure booster up to, for example, 30 MPa or higher, preferably 100 MPa or higher, more preferably 150 MPa or higher, particularly preferably 220 MPa or higher (high pressure conditions), and jetting the dispersion liquid through nozzles with a pore diameter of 50 $\mu$m or larger to release the pressure so that the pressure differential is, for example, 30 MPa or more, preferably 80 MPa or more, more preferably 90 MPa or more (reduced pressure conditions). Due to the cleavage phenomenon caused by this pressure differential, the pulp fibers are defibrated. With the pressure under the high pressure conditions being too low, or with the pressure differential between the high pressure conditions and the reduced pressure conditions being too small, the defibration efficiency is low, and repeated defibration (jetting through the nozzles) is required until the desired fiber width is achieved.

As the apparatus for defibration in high-pressure water streams, a high-pressure homogenizer is preferably used, which is a homogenizer capable of jetting a slurry of cellulose fibers at, for example, 10 MPa or higher, preferably 100 MPa or higher. By the treatment in a high-pressure homogenizer, the cellulose fibers are effectively defibrated through the actions of collision between cellulose fibers, pressure differential, microcavitation, or the like. In this way, the number of defibration treatments may be reduced to improve manufacturing efficiency of the fine cellulose fibers.

The high-pressure homogenizer preferably causes colinear, countercurrent collision of streams of a cellulose fiber slurry. Specifically, such a high-pressure homogenizer may be, for example, a countercurrent high-pressure homogenizer, MICROFLUIDIZER (registered trademark) (wet jet mill). In this apparatus, two upstream channels are provided so that two streams of a pressurized cellulose fiber slurry undergo countercurrent collision in a joint chamber. The streams of the cellulose fiber slurry collide in the joint chamber, and then flow out through a downstream channel. The downstream channel is provided at right angles to the upstream channels, forming together a T-junction. In such a high-pressure homogenizer of countercurrent collision type, the energy provided by the high-pressure homogenizer is converted maximally to the collision energy to realize more efficient defibration of cellulose fibers.

The fine cellulose fibers obtained through the defibration may be dispersed in an aqueous medium to prepare dispersion liquid, prior to mixing with inorganic fine particles. The aqueous medium is particularly preferably water in its entirety (aqueous solution), but aqueous medium partly containing another liquid compatible with water may also be used. Such another liquid may be, for example, a lower alcohol having 3 or less carbon atoms.

As used herein, fine cellulose fibers of which hydroxyl groups have been substituted (modified) to have phosphorus oxoacid ester groups introduced therein are referred to as modified fine cellulose fibers (sometimes referred to as modified CNF hereinbelow), and may sometimes be distinguished from unmodified fine cellulose fibers, wherein hydroxyl groups of the cellulose fibers have not been substituted (sometimes referred to as unmodified CNF hereinbelow). Thus, fine cellulose fibers conceptually include modified fine cellulose fibers and unmodified fine cellulose fibers.

The fine cellulose fibers constituting the cellulose particles according to the present embodiment may solely be the unmodified fine cellulose fibers or solely be the modified fine cellulose fibers, or may contain unmodified and modified fine cellulose fibers.

Where the cellulose particles are composed of the modified fine cellulose fibers, dispersion liquid of the cellulose particles in a dispersion medium takes on a transparent color, whereas where the cellulose particles are composed of the unmodified fine cellulose fibers, dispersion liquid of the cellulose particles in a dispersion medium takes on a white color. By adjusting the proportion of the modified and unmodified fine cellulose fibers in the fine cellulose fibers constituting the cellulose particles, dispersion liquid of an intermediate color between the white color and the transparent color may be prepared. For production of such dispersion liquid, for example, in the preparation of the dispersoid cellulose particles, a mixture of the modified and unmodified fine cellulose fibers may preferably be used as the raw material fine cellulose fibers for the cellulose particles.

The cellulose particles take on the form of white powder irrespective of whether the raw material is the modified or unmodified fine cellulose fibers. The modified fine cellulose fibers, which have a smaller average fiber diameter compared to that of the unmodified fine cellulose fibers, are formed into cellulose particles which tend to have a larger specific surface area compared to that of the cellulose particles of the same mass formed of the unmodified fine cellulose fibers.

The defibration of the raw material pulp is preferably carried out so that the physical properties or the like of the resulting fine cellulose fibers fall under the desired values or evaluations as will be discussed below.

<Average Fiber Diameter>

The average fiber diameter of the fine cellulose fibers (average fiber width, or average of diameters of single fibers) is at most 1000 nm or smaller, preferably 500 nm or smaller, more preferably 100 nm or smaller, particularly preferably 50 nm or smaller. With an average fiber diameter of the fine cellulose fibers over 1000 nm, relatively small specific surface area is imparted to the resulting cellulose particles, which are thus less porous. On the other hand, the lower limit of the average fiber diameter of the fine cellulose fibers is not particularly limited.

The average fiber diameter of fine cellulose fibers may be adjusted by, for example, selection, pretreatment, or defibration of the raw material pulp.

The average fiber diameter of the fine cellulose fibers is determined as follows.

First, 100 ml of an aqueous dispersion of the fine cellulose fibers having a solid concentration of 0.01 to 0.1 mass% is filtered through a TEFLON (registered trademark) membrane filter, and subjected to solvent substitution once with 100 ml of ethanol and three times with 20 ml of t-butanol. Then the resulting mass is lyophilized and coated with osmium to obtain a sample. An electron microscopic SEM image of this sample is observed at a magnification of 3000 to 30000 folds, depending on the width of the constituent fibers. Specifically, two diagonal lines are drawn on the observation image, and three arbitrary straight lines passing the intersection of the diagonals are drawn. Then, the widths of a total of 100 fibers crossing these three straight lines are visually measured. The median diameter of the measured values is taken as the average fiber diameter.

<Average Fiber Length>

The average fiber length (average of lengths of single fibers) of the fine cellulose fibers is, for example, preferably 0.01 to 1000 $\mu$m, more preferably 0.05 to 500 $\mu$m. With an average fiber length over 1000 $\mu$m, the fine cellulose fibers are entangled in drying, which makes the fibers vulnerable to carrying other substances, and however, makes the particles hard to disintegrate upon redispersion.

The average fiber length may be adjusted by, for example, selection, pretreatment, or defibration of the raw material pulp.

The average fiber length of the fine cellulose fibers may be determined in the same way as for the average fiber diameter, i.e., the length of each fiber is measured visually, and the median diameter of the measured values is taken as the average fiber length.

<Aspect Ratio>

The aspect ratio of the fine cellulose fibers (average fiber length divided by average fiber width) is preferably 10 to 1000000, more preferably 50 to 500000, particularly preferably 100 to 100000. With an aspect ratio of the fine cellulose fibers below 10, the cellulose component is in the form of almost particles, and thus is hard to be formed into the cellulose particles. With an aspect ratio over 1000000, the fibers are highly entangled to make it hard to impart a desired average particle size to the resulting cellulose particles.

<Degree of Crystallinity>

The degree of crystallinity of the fine cellulose fibers is preferably at least 50 or higher, more preferably 60 or higher, particularly preferably 65 or higher, and preferably at most 100 or lower, more preferably 95 or lower, particularly preferably 90 or lower. At a degree of crystallinity below 50, entanglement of the fibers is weakened by the impact of temperature changes during drying or the like, which makes the fibers less capable of holding other substances, and makes it hard to impart a desired average particle size to the resulting cellulose particles.

The degree of crystallinity refers to a value determined by X-ray diffraction in accordance with JIS K0131 (1996) "General Rules for X-ray Diffraction Analysis". Note that fine cellulose fibers have amorphous regions and crystalline regions, and the degree of crystallinity refers to the ratio of the crystalline regions with respect to the entire fine cellulose fibers.

<Pseudo Particle Size Distribution>

The pseudo particle size distribution curve of the fine cellulose fibers preferably has one peak. With one peak, the fine cellulose fibers have high uniformity in fiber length and fiber diameter, and are ready to be mutually entangled in the production of the cellulose particles, so that the resulting cellulose particles are hard to be disintegrated in redispersion. Further, the cellulose particles have a smaller variation in particle diameter. In the form of cellulose particles carrying inorganic fine particles, the cellulose particles, when blended into cosmetics as one of the components thereof, are well-dispersed in the cosmetics.

The peak value of the pseudo particle size distribution curve of the fine cellulose fibers is determined in accordance with ISO-13320 (2009). Specifically, a volume-based particle size distribution of an aqueous dispersion of the fine cellulose fibers is determined using a particle size distribution measuring device (laser diffraction/scattering-type particle size distribution measuring apparatus manufactured by SEISHIN ENTERPRISE CO., LTD.). From the obtained distribution, the mode for the diameter of the fine cellulose fibers is determined, and is taken as the peak value. It is preferred that the pseudo particle size distribution curve of the fine cellulose fibers in the form of an aqueous dispersion measured by laser diffraction, preferably has a single peak. In this way, the fine cellulose fibers with a single peak have been made sufficiently finer and may exhibit good properties as fine cellulose fibers, which is preferred. The peak value of the pseudo particle size distribution curve of the fine cellulose fibers with the single peak is, for example, preferably 300 $\mu$m or less, more preferably 200 $\mu$m or less, particularly preferably 100 $\mu$m or less. With a peak value over 300 $\mu$m, the fine cellulose fibers may have a larger amount of relatively large fibers, and impart a larger variation in particle size to the resulting cellulose particles, and the shape of the cellulose particles tends to be non-uniform.

The peak value of the pseudo particle size distribution curve and the median diameter of the distribution of the fine cellulose fibers may be adjusted by, for example, selection, pretreatment, or defibration of the raw material pulp.

<Water Retention Degree>

The water retention degree of the fine cellulose fibers is not particularly limited and, for example, the water retention degree of the unmodified fine cellulose fibers is 500% or lower, more preferably 100 to 500%. At a water retention degree over 500%, the fine cellulose fibers per se have a high water retention degree and thus a poor dewaterability, so that even the fine cellulose fibers are processed through a drying step, the drying step may require a prolonged period of time, which deteriorates productivity. The lower limit of the water retention degree of the fine cellulose fibers is not particularly limited, and is preferably 100% or higher for improved dispersibility of the fine cellulose fibers.

The water retention degree of the fine cellulose fibers may be adjusted by, for example, selection, pretreatment, or defibration of the raw material pulp.

The water retention degree of the fine cellulose fibers refers to a value determined in accordance with JAPAN TAPPI No. 26 (2000).

<Pulp Viscosity>

The pulp viscosity of the defibrated fine cellulose fibers is 1 to 10 cps, more preferably 2 to 9 cps, particularly preferably 3 to 8 cps. The pulp viscosity refers to a viscosity of a solution of cellulose in a cupriethylenediamine solution, and a higher pulp viscosity represents a higher degree of polymerization of the cellulose. The pulp viscosity also affects the strength of fibers per se.

<Additive>

An additive may be added for improving dispersibility, in a solvent, of the cellulose particles produced through a drying step. The additive may be added to the fine cellulose fibers before freezing, and preferably mixed into a homogenous mixture. The additive may be one or more members selected from the group consisting of polyhydric alcohols, polysaccharides, and water-soluble high polymers. The blending ratio of the additive (additive : fine cellulose fibers) may be 1:99 to 50:50, preferably 50:50, in terms of solids. At too high a ratio of the additive with respect to the fine cellulose fibers, sticky, dried product (cellulose particles) results, and the light-weight feel of the cellulose particles of the present invention will be lost, and the handling property is deteriorated. At too low a ratio of the additive, dispersing effect of the object into the solvent may be deteriorated.

The polyhydric alcohols as the additive may be glycerin, propylene glycol, butylene glycol, pentanediol, dipropylene glycol, hexanediol, or heptanediol, but are not limited to these. Glycerin is particularly preferred for its thickening property and ability to disperse composite particles.

The polysaccharides may be quince seed, Veegum, xanthan gum, hyaluronates, or the like, but are not limited to these. Hyaluronates are particularly preferred for its thickening property and ability to disperse cellulose particles.

The water-soluble high polymers may be polyvinyl alcohol, polyvinyl pyrrolidone, carboxyvinyl polymer, or polyethylene glycol, but are not limited to these. Polyvinyl pyrrolidone is particularly preferred for its thickening property and ability to disperse cellulose particles.

<Inorganic Fine Particles>

The cellulose particles may contain inorganic fine particles. The inorganic fine particles may impart various functions to the cellulose particles. For example, metal-based inorganic fine particles, which function to diffusely reflect incident light, may give the cellulose particles, by being contained therein, the effect of diffusely reflecting light. For example, the cellulose particles containing the inorganic fine particles may be added to cosmetics as one of the components thereof, to impart a sunlight transmission-blocking effect to the cosmetics. Application of cosmetics having the sunlight transmission-blocking effect to the skin provides sunscreen effect.

The content percentage of the inorganic fine particles in the cellulose particles may be at most 50 mass%, preferably 45 mass% or lower, and at least 0 mass%, preferably 5 mass% or higher. At a content percentage over 50 mass%, the proportion of the inorganic fine particles to the fine cellulose fibers is too high and thus the specific gravity of the cellulose particles is too high, so that redispersibility of the cellulose particles in a dispersion medium may be impaired. At a content percentage of 5 mass% or higher, the inorganic fine particles fully exhibit the sunlight transmission-blocking effect.

The primary particle size of the inorganic fine particles may be at most 10 $\mu$m, preferably 5 $\mu$m or smaller, more preferably 1 $\mu$m or smaller. With a primary particle size over 10 $\mu$m, the inorganic fine particles may be hard to be carried by the fine cellulose fibers, and the surface area of the cellulose particles may not be sufficiently large. The lower limit of the primary particle size of the inorganic fine particles is not particularly limited, and may be 1 nm, preferably 2 nm or larger, more preferably 3 nm or larger. With a primary particle size of 1 nm or larger, the inorganic fine particles, when mixed in a slurry of the fine cellulose fibers, may disperse and easily be entangled with the fine cellulose fibers.

The primary particle size of the inorganic fine particles may be measured by electron microscopic observation, and the average of the obtained particle sizes is taken as the measured value.

The inorganic fine particles may of course be used as they are, but may preferably be subjected to hydrophilization for increasing affinity to an aqueous dispersion of the fine cellulose fibers. A surface treatment agent for the hydrophilization may restrain the surface activity of the inorganic fine particles, and improve dispersibility as well as transparency and squeaking, of the inorganic fine particles. The surface treatment agent for the inorganic fine particles is not particularly limited as long as it is dispersible in an aqueous dispersion of the fine cellulose fibers, and may preferably contain silicic anhydride or hydrated silica.

The inorganic fine particles may be any known inorganic fine particles without limitation, for example, barium titanate, lead zirconate titanate, silicon carbide, silicon nitride, aluminum nitride, alumina, zirconia, zircon, titanium oxide, zinc oxide, iron oxide, or cerium oxide. Powder of these, in combination with the cellulose particles containing the fine cellulose fibers, is preferred for its redispersibility in liquid. For blocking sunlight transmission, one or a combination of two more members may be selected and used from the group consisting of titanium oxide, zinc oxide, iron oxide, and cerium oxide. In particular, rutile-type titanium oxide as the inorganic fine particles is preferred for improved blocking of sunlight transmission in a cosmetic composition.

The shape of the inorganic fine particles that may be contained in the cellulose particles is not particularly limited, and may be, for example, spherical, rod-shaped, needle-shaped, spindle-shaped, plate-shaped, or polygonal.

The inorganic fine particles may be adhered to the surfaces of the fine cellulose fibers in the cellulose particles, or enclosed in the fine cellulose fibers. With the inorganic fine particles enclosed in the fine cellulose fibers, the inorganic fine particles may be carried not only on the surfaces of, but also inside the cellulose particles, so that excellent blocking of transmission may be achieved against sunlight irradiation from various angles. Here, the term "enclosed" means that the surfaces of the inorganic fine particles are partly covered with the fine cellulose fibers, or the inorganic fine particles are covered with the fine cellulose fibers and not observable when observed from the outside.

The inorganic fine particles may be added to the fine cellulose fibers before freezing, and preferably mixed into a homogenous mixture.

<Cellulose Particles>

The cellulose particles according to the present embodiment contain preferably 50 mass% or more, more preferably 60 mass% or more, still more preferably 70 mass% or more fine cellulose fibers, and may contain the maximum of 100 mass% fine cellulose fibers. With a mass percentage of the fine cellulose fibers in the cellulose particles below 50 mass%, the desired bulk density and specific surface area of the cellulose particles according to the present invention may not be achieved.

The cellulose particles according to the present embodiment may preferably have a packed bulk density of 0.1 to 200 mg/cm$^3$ and an average particle size of 0.1 to 1000 $\mu$m, more preferably a packed bulk density of 0.1 to 150 mg/cm$^3$ and an average particle size of 0.1 to 700 $\mu$m, still more preferably a packed bulk density of 0.1 to 100 mg/cm$^3$ and an average particle size of 0.1 to 500 $\mu$m. The packed bulk density and the average particle size are factors that are strongly related to redispersibility. For example, even the average particle size is the maximum 1000 $\mu$m of the above-mentioned range, with a packed bulk density exceeding the maximum 200 mg/cm$^3$ of the above-mentioned range, the cellulose particles are mutually aggregated firmly to lower the redispersibility in a dispersion medium, whereas even the average particle size is the maximum 1000 $\mu$m of the above-mentioned range, with a packed bulk density below the minimum 0.1 mg/cm$^3$ of the above-mentioned range, superlight porous cellulose particles are provided, which cannot maintain its shape in air for a prolonged period of time and are prone to deterioration, so that such cellulose particles are hard to be handled.

The average particle size of the cellulose particles is measured using a measuring device in accordance with ISO-13320 (2009), specifically, laser diffraction/scattering-type particle size distribution measuring apparatus LA-960V2 by a dry method without extracting water attached to the cellulose particles.

<Specific Surface Area>

The specific surface area of the cellulose particles is preferably 20 m²/g or larger, more preferably 30 m²/g or larger, still more preferably 40 m²/g or larger, and the upper limit is not particularly limited and may be 5000 m²/g. With a specific surface area below 20 m²/g, the cellulose particles, when introduced into a dispersion medium, are hard to exhibit affinity to and have poor redispersibility in the dispersion medium due to a small contact area therebetween. On the other hand, the cellulose particles with a specific surface area over 5000 m²/g are preferred for their light weight and redispersibility, but are extremely hard to be produced.

The specific surface area is determined by the BET method. Specifically, the measurement is carried out by means of measuring apparatus, NOVA 4200e manufactured by QUANTACHROME INSTRUMENTS, with $N_2$ adsorption. The testing method is in accordance with JIS Z8830: 2013.

<Viscosity>

The cellulose particles have a large number of hydrogen bonding points on the cellulose fibers and, when mixed in a dispersion medium having affinity to the cellulose fibers (such as water or organic solvent), disperse to form dispersion liquid. The dispersed cellulose particles are mutually bonded through hydrogen bonding or the like of the groups having the polarity inherent in the cellulose particles per se, to loose freedom, which results in increased viscosity.

The cellulose particles in dispersion liquid are mutually bonded through hydrogen bonding or the like in a dispersed state, which results in increased viscosity. When shear force is applied to the dispersion liquid, the hydrogen bonding is weakened to lower the viscosity. This means that the cellulose particles have thixotropic properties. The viscosity varies depending on the concentration of the cellulose particles in the dispersion liquid, or the raw material of the cellulose particles.

The B-type viscosity of dispersion liquid containing 2 mass% cellulose particles (as used herein, the dispersion medium for measuring B-type viscosity is water) measured at 25 °C at 6 rpm may be 1000 cps or higher, preferably 1000 to 30000 cps, more preferably 1500 to 20000 cps. With a B-type viscosity of the dispersion liquid below 1000 cps, redispersibility in the dispersion medium may be low. The B-type viscosity of dispersion liquid containing 2 mass% cellulose particles measured at 25 °C at 60 rpm may be 100 cps or higher, preferably 100 to 10000 cps, more preferably 200 to 9000 cps. At a B-type viscosity below 100 cps, the ratio between the viscosity at 60 rpm and the viscosity at 6 rpm is too low, which may result in low redispersibility in a dispersion medium.

The Ti value of dispersion liquid containing 2 mass% cellulose particles at 25 °C may be 2 or more, preferably 3 or more, still more preferably 4 or more. The Ti value represents the property of decreasing in viscosity when subjected to a shear stress (pseudoplasticity), and a larger value indicates better spreadability of dispersion liquid containing 2 mass% cellulose particles when applied to the skin. The closer a Ti value of dispersion liquid of the cellulose particles is to the Ti value of dispersion liquid containing 2 mass% fine cellulose fibers used in the production of the cellulose particles measured under the same conditions as the measurement of the dispersion liquid of the cellulose particles (i.e., a B-type viscosity of the dispersion measured at 25 °C at 6 rpm and a B-type viscosity of the dispersion liquid measured at 25 °C at 60 rpm), the cellulose particles may indicate higher redispersibility.

The Ti value may be calculated according to Formula 1 below:

(Ti Value) = (B-type Viscosity of Dispersion Liquid at 25 °C at 6 rpm) / (B-type Viscosity of Dispersion Liquid at 25 °C at 60 rpm)

Here, the B-type viscosity is measured in accordance with JIS-Z8803 (2011) "Methods for Viscosity Measurement of Liquid". The B-type viscosity is a resistance torque in stirring dispersion liquid, and a higher value indicates more energy required for stirring.

The B-type viscosity and the Ti value of dispersion liquid may be adjusted by adjusting some factors. For example, the B-type viscosity may be adjusted by varying the properties of the cellulose particles per se and the concentration of the cellulose particles in the dispersion liquid. With the unmodified cellulose particles, the concentration of the cellulose particles of 1 to 3 mass% in dispersion liquid leads to a high redispersibility in the dispersion liquid. With the modified cellulose particles, the concentration of the cellulose particles of 0.5 to 2.0 mass% in dispersion liquid leads to a high redispersibility in the dispersion liquid. With a concentration over the above ranges, the amount of the cellulose particles in the dispersion liquid is too large, which leads to an extremely high B-type viscosity, whereas with a concentration below the above ranges, the amount of the cellulose particles is too small, which results in a viscosity comparable to that of water.

Irrespective of whether the dispersoid is the fine cellulose fibers or the cellulose particles, dispersion liquid thereof in water has a particular B-type viscosity. Where the B-type viscosity of dispersion liquid of the fine cellulose fibers is V0 and the B-type viscosity of dispersion liquid of the cellulose particles produced from the fine cellulose fibers (i.e., a cellulose-particle dispersion liquid) is V1, the percentage of viscosity change PV is represented by the following formula:

$$PV\ (\%)\ =\ (V1/V0)\ \times\ 100$$

Note that the B-type viscosity of the dispersion liquid varies depending on whether the fine cellulose fibers have been modified or unmodified. Thus, the measurement should preferably be made of the unmodified fine cellulose fibers at a 2 mass% concentration of the fine cellulose fibers (or the concentration of the cellulose particles) in the dispersion liquid, and of the modified fine cellulose fibers at a 0.5 mass% concentration of the fine cellulose fibers (or the concentration of the cellulose particles) in the dispersion liquid.

The percentage of viscosity change PV varies depending on the rotational speed in the measurement of the B-type viscosity, and with the fine cellulose fibers and the cellulose particles according to the present embodiment, the percentage of viscosity change PV at a rotational speed of 6 rpm is preferably 30% or higher, more preferably 40% or higher. At a percentage of viscosity change PV below 30%, the cellulose particles are highly solid and poor in light-weight feel. With the fine cellulose fibers and the cellulose particles according to the present embodiment, the percentage of viscosity change PV at a rotational speed of 60 rpm is preferably 40% or higher, more preferably 45% or higher.

<Moisture Percentage>

The moisture percentage of the cellulose particles is preferably 50% or lower, more preferably 40%, still more preferably 30% or lower. At a moisture percentage over 50%, the cellulose particles have too large an amount of adsorbed moisture, which impairs the light-weight feel.

<Bulk Density>

The bulk density of the cellulose particles according to the present embodiment is preferably 0.1 to 200 mg/cm$^3$, more preferably 0.1 to 150 mg/cm$^3$, still more preferably 0.1 to 100 mg/cm$^3$ in packed bulk density. Cellulose particles with a packed bulk density below 0.1 mg/cm$^3$ are prone to disintegration into powder in air, which deteriorates the handling property. Cellulose particles with a packed bulk density over 200 mg/cm$^3$ are in the form of aggregates of firmly entangled fibers with poor dispersibility.

<Compressibility>

The cellulose particles preferably have a packed bulk density of 0.1 to 200 mg/cm$^3$ as discussed above and a compressibility of preferably 50% or lower, more preferably 45% or lower, still more preferably 40%. Since the cellulose particles according to the present embodiment are relatively light in weight, only the gaps among the particles are filled during compaction for the measurement of packed bulk density after the measurement of loose bulk density (i.e., by filling the gaps, the container is densely filled with the cellulose particles), whereas the change in density of the cellulose particles per se is small, which hardly results in deterioration of the particle shape. Further, the cellulose particles are not spherical with superior sphericity, but have irregular surfaces (though difficult to express), so that when a container is charged with the cellulose particles, a number of gaps of various sizes and shapes result. A compressibility over 50% implies not only the filling of the gaps among the particles, but also deterioration of the cellulose particles, so that the light-weight feel of the particles may be lost. Further, in the cellulose particles produced through hot drying, the fibers firmly aggregate to form solid particles at a bulk specific gravity exceeding 200 mg/cm$^3$, even with the degree of compressibility of 50% as discussed above, so that only the filling of the gaps among the particles occurs, whereas the deterioration of the particles per se hardly occurs.

The packed bulk density and the loose bulk density are among the items used for calculation of Carr indices for fluidity, and determined in accordance with ASTM D6393-99 "Measurement of Compressibility". The measurement is made using "Multiple Powder Characteristics Analyzer Multi Tester MT-02" manufactured by SEISHIN ENTERPRISE CO., LTD.

The cellulose particles may be produced from cellulose nanofibers as a raw material, by lyophilizing, drying under reduced pressure, drying under heating, spray drying, or by spray freezing and drying under reduced pressure, which is the method of drying the cellulose particles according to the present embodiment, and in particular, the spray freezing and drying under reduced pressure results in porous cellulose particles, which is preferred. With the porous property, the cellulose particles may have other substance carried in the number of pores formed therein, or their large surface area may be utilized. In this way, properties not inherent in cellulose may be imparted to the cellulose particles.

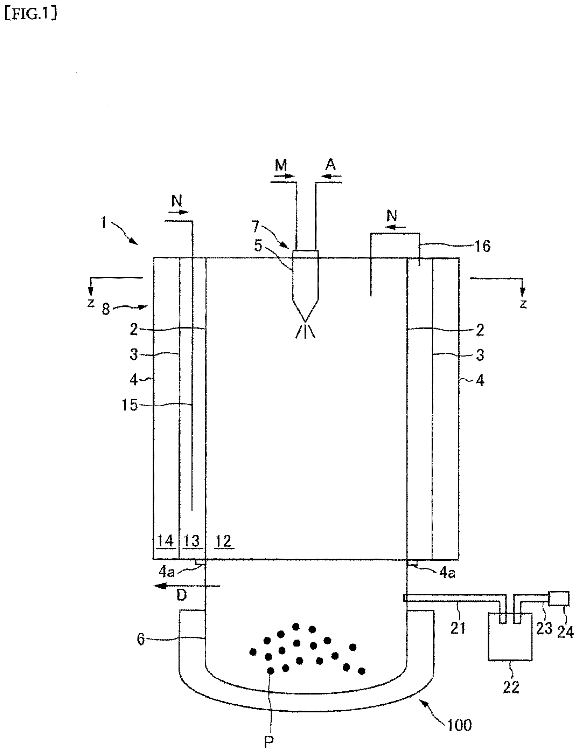

The cellulose particles according to the present invention may be produced through lyophilizing treatment, and, for example, the spray-type freeze granulator 1 as shown in Fig. 1 is preferred for production of particles having a relatively low specific gravity. The spray-type freeze granulator 1 has freeze granulation chamber 8, atomizer section 7 for spraying raw material M into the upper part of the freeze granulation chamber 8, and drying section 6 disposed below the freeze granulation chamber 8 for drying the frozen cellulose particles. The raw material M atomized in the freeze granulation chamber 8 is instantaneously frozen in the freeze granulation chamber 8 into frozen bodies P. The frozen bodies P fall freely into the drying section 6 and collect therein. The drying section 6 is in detachable connection to the freeze granulation chamber 8 and, when the frozen bodies P collect therein, is detached from the freeze granulation chamber 8, hermetically sealed, and subjected to drying of the frozen bodies P, to thereby obtain the cellulose particles.

The raw material M may be a slurry or dispersion liquid of the fine cellulose fibers. The fine cellulose fibers used as the raw material M may be a group of fine cellulose fibers, or a combination of two groups of fine cellulose fibers. The combination of two groups of fine cellulose fibers may be a mixture of group C1 of fine cellulose fibers having an average particle size R of 11 to 1000 nm and group C2 of fine cellulose fibers having an average particle size R of 1 to 10 nm at a mixing ratio of 1:99 to 99:1.

The atomizer section 7 has a raw material line through which the raw material M is fed, a compressed gas line through which compressed gas A is fed, and a nozzle 5 for atomizing a mixed fluid of the supplied raw material M and the supplied compressed gas A into the freeze granulation chamber 8 (also referred to as a two-fluid nozzle). The nozzle 5 may be in the form of a three-fluid nozzle, a four-fluid nozzle, a pressurized nozzle, an ultrasonic nozzle, or a centrifugal atomizing nozzle.

The raw material line is connected at its base end to a raw material tank in which the raw material M is stored, and is configured to flow the raw material M therethrough from the raw material tank into the nozzle 5 by means of a pump provided in the raw material line. The compressed gas line is connected at its base end to a compressed-gas-supply unit, including a compressor, a cylinder, and the like, and is configured such that, by activating the compressed-gas-supply unit, the compressed gas flows into the nozzle 5. The compressed gas may be, for example, air, nitrogen, or a noble gas.

The raw material M may contain, in addition to the fine cellulose fibers, an additive and/or inorganic fine particles, and further optionally a plasticizer (phthalic acid esters, citric acid esters, or the like) and/or an emulsifier (e.g., nonionic surfactant, anionic surfactant, cationic surfactant, amphoteric surfactant, or phospholipid) may be used. In particular, an ester-type or ester-ether type nonionic surfactant is preferably used and, for example, glycerin fatty acid esters, polyglycerin fatty acid esters, propylene glycol fatty acid esters, sorbitan fatty acid esters, or fatty acid esters of sorbitol, or alkylene glycol addition products of these esters, polyalkylene glycol fatty acid esters, sucrose fatty acid esters, polysorbate 20, polysorbate 60, polysorbate 80, polyoxyalkylene alkyl ethers, or polyoxyethylene alkylphenyl ethers may be added to the raw material M.

The freeze granulation chamber 8 is composed of three chambers, specifically, three cylinders of different diameters arranged coaxially around a common vertical axis. These three cylinders are referred to, from the innermost outwards, as an inner chamber wall 2, an intermediate chamber wall 3, and an outer chamber wall 4, and an inner chamber defined by the inner chamber wall 2 is a freezing chamber 12 for freezing the raw material M, a bottomed intermediate chamber defined by the inner and intermediate chamber walls 2 and 3 is a coolant reservoir chamber 13 containing a cooling medium, and a bottomed outer chamber defined by the intermediate and outer chamber walls 3 and 4 is a vacuum-insulated chamber 14 for maintaining the temperature inside the chamber constant. The freezing chamber 12 may preferably be detachably connected at the lower edge of the inner chamber wall 2 to a flange 4a formed at the top edge of the drying section 6.

In the freezing chamber 12, the raw material M atomized through the nozzle 5, which is disposed near the top face of the chamber 12, is frozen into the frozen bodies P. The freezing chamber 12 is preferably maintained at a temperature of -10 °C to -200 °C by means of a cooling medium supplied from the coolant reservoir chamber 13.

The coolant reservoir chamber 13 contains a cooling medium for colling the freezing chamber 12. The cooling medium may be, for example, liquid nitrogen, liquid argon, liquid helium, or dry ice.

The vacuum-insulated chamber 14 is defined by the intermediate chamber wall 2 and the outer chamber wall 4, with the upper ends of the intermediate and outer chamber walls 2 and 4 closed together and the lower ends of the intermediate and outer chamber walls 2 and 4 closed together, so that the vacuum-insulated chamber 14 is blocked against fluid flowing from outside and maintained in a vacuum, so that heat transfer between the cooling medium contained in the coolant reservoir chamber 13 and the external air is hard to occur.

The coolant reservoir chamber 13 is equipped with a coolant feed pipe 15 extending from outside into the coolant reservoir chamber 13 for feeding a cooling medium N into the coolant reservoir chamber 13, and a coolant introduction pipe 16 for introducing into the freezing chamber 12 a cooling medium gas formed by gasification of the cooling medium N contained in the coolant reservoir chamber 13.

The frozen bodies P produced in the freeze granulation chamber 8 is stored in the drying section 6, which is in detachable connection to the freeze granulation chamber 8. After a predetermined amount of the frozen bodies P collect in the drying section 6, the drying section 6 is detached from the freeze granulation chamber 8, hermetically sealed, and subjected to lyophilization to obtain the cellulose particles. The structure of a dryer unit 100 according to the present embodiment is discussed below.

A dryer unit 100 includes the drying section 6 and a vacuuming mechanism. The drying section 6 may be configured to have a cylindrical wall having its axis extending vertically, and a bottom continued from the wall. The cylindrical wall may be provided with an openable/closable exhaust port (not shown), through which the gas in the drying section 6 may be discharged as an exhaust gas D. The upper edge of the cylindrical wall has been formed into a flange 4a, and is detachably connected to the lower edge of the freeze granulation chamber 8. The frozen bodies P produced in the freeze granulation chamber 8 fall into the drying section 6, which is then detached from the freeze granulation chamber 8, covered with a lid over the flange 4a, hermetically sealed, and subjected to lyophilization of the frozen bodies P.

The frozen bodies P may be dried in the following manner. The drying section 6 is configured to receive a vacuuming gas pipe 21 connected at a base end thereof, and the gas drawn out through the gas pipe 21 is led to a cold trap 22 connected to the other end of the gas pipe 21, wherein part of the gas is condensed and separated as a condensed liquid or solid, whereas the remaining gas is drawn by a vacuum pump 24 provided at one end of a gas pipe 23, which is connected at the other end to the cold trap 22. By activating the vacuum pump 24 with the drying section 6 hermetically sealed, while the pressure in the drying section 6 is decreased, sublimable or vaporizable substances contained in the frozen bodies P (e.g., water, when the raw material M is dispersion liquid of fine cellulose fibers in water) are sublimated or vaporized and drawn by the vacuum pulp 24, with the remaining being cellulose particles. During the drying treatment, the drying unit 6 may be subjected to swinging or shaking in order not to mutually aggregate the frozen bodies P or in order to evenly dry the individual frozen bodies P. The shaking or swinging of the drying section 6 may be performed manually or by means of a shaking or swinging mechanism. For shaking, the drying section 6 may be held at diametrically opposed ends (4a, 4a in Fig. 1) of the generally annular flange, and shaken from side to side, whereas for swinging, the drying section 6 may be rotated clockwise and counterclockwise alternately and repeatedly around the diameter of the flange as a rotation axis. The pivot angle of the clockwise or counterclockwise rotation is not particularly limited, and may be 30 ° to 100 °, for which angle the frozen bodies P in the drying section 6 may be well rocked. The drying treatment may not require the swinging or shaking, and may be carried out by vacuum drying with the frozen bodies P kept stationary. Though it depends, the bulk density of the cellulose particles to be produced could be relatively high with the swinging or shaking during the drying.

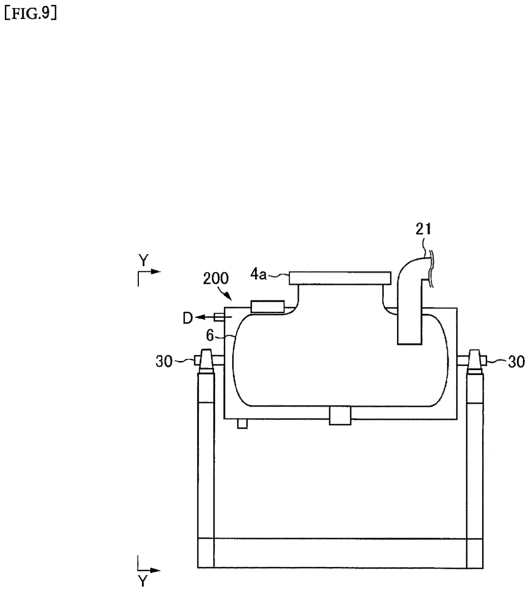

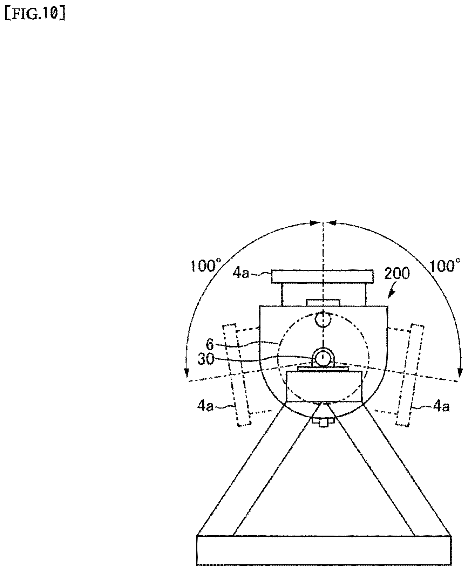

A dryer unit 200 according to another embodiment is discussed with reference to Figs. 9 and 10. The dryer unit 200 differs from the dryer unit 100 of Fig. 1 discussed above in that the dryer unit 200 is provided with an axis 30 around which the drying section 6 is to be swung. The drying section 6 may be configured, by providing a swinging mechanism, to rotate around the axis 30, for example, for 100 ° clockwise or counterclockwise as seen in Fig. 10.

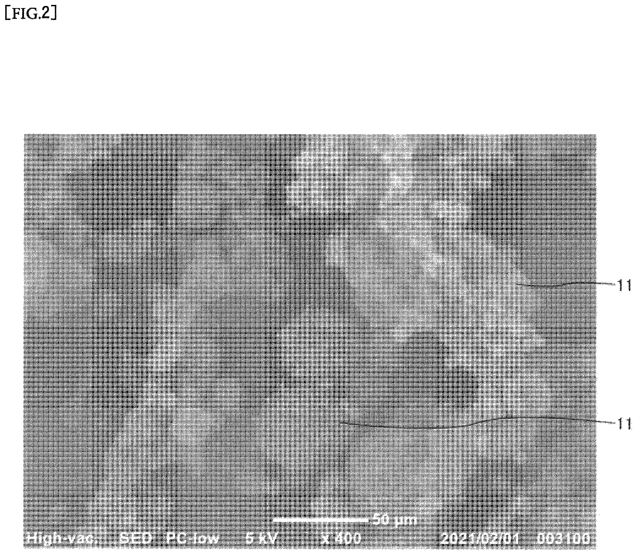

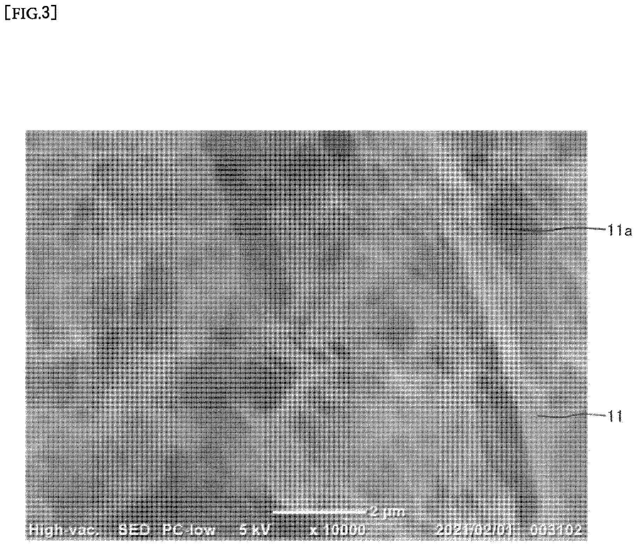

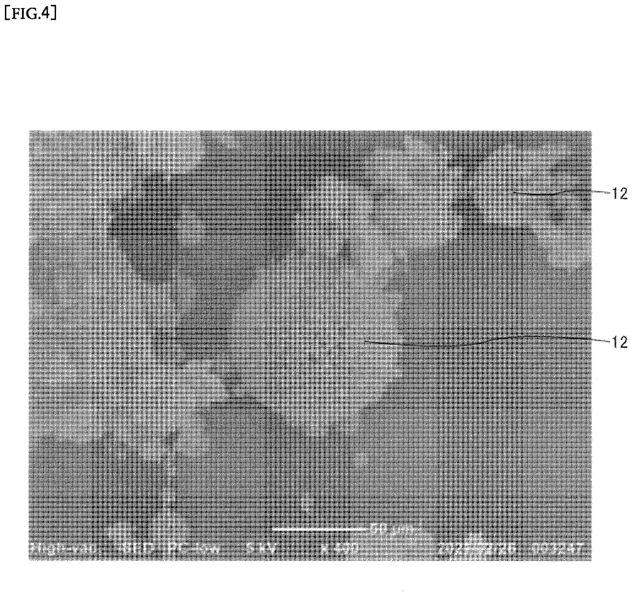

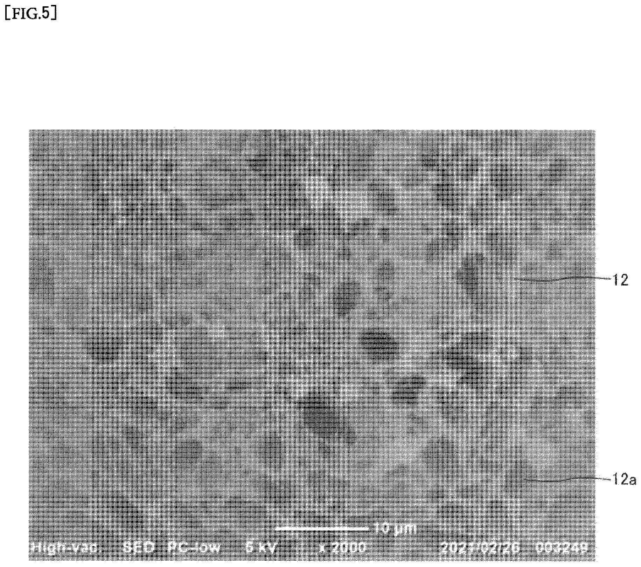

The cellulose particles 11, 12 produced by the method discussed above are shown in Figs. 2 to 5. The cellulose particles 11 shown in Figs. 2 and 3 were produced from a 2 mass% aqueous dispersion of unmodified fine cellulose fibers (ELLEX(registered trademark)-S) as a raw material, using the spray-type freeze granulator 1. The cellulose particles 11 were observed to have a number of pores 11a. The cellulose particles 12 shown in Figs. 4 and 5 were produced from a 2 mass% aqueous dispersion of modified fine cellulose fibers (ELLEX(registered trademark)-star) as a raw material, using the spray-type freeze granulator 1. The cellulose particles 12 were observed to have a number of pores 12a. The drying treatment was performed by vacuum drying in a vacuum dryer (EYELA FDU-2110 manufactured by TOKYO RIKAKIKAI CO., LTD.) with the frozen bodies kept stationary. The freeze granulation chamber 8 may be Cryochamber CS30 manufactured by PRECI CO., LTD., and the dryer unit 200 may be Barrel freeze-drying unit TFD-10 manufactured by PRECI CO., LTD.

EXAMPLES

<Preparation in Test Examples and Comparative Examples>

<Test Example 1>

Examples are discussed below. Production in Test Example 1 was as follows. Dispersion liquid of unmodified fine cellulose fibers (ELLEX(registered trademark)-S manufactured by DAIO PAPER CORPORATION) at 2 mass% concentration in water as a raw material was supplied to the spray-type freeze granulator to produce cellulose particles, which were taken as Test Example 1. The fine cellulose fibers had an average fiber diameter of 50 nm. In the course of the freezing treatment by atomizing the raw material in the spray-type freeze granulator to obtain frozen bodies as an intermediate, which was then vacuum-dried to obtain the cellulose particles, the fine cellulose fibers were subjected to the freezing treatment in Cryochamber CS30 manufactured by PRECI CO., LTD., and the resulting frozen bodies were dried in Barrel freeze-drying unit TFD-10 manufactured by PRECI CO., LTD. while swinging, until completely dried.

<Test Example 2>

Production in Test Example 2 was as follows. The fine cellulose fibers in the same dispersion liquid as used in Test Example 1 used as a raw material, were supplied to Cryochamber CS30 manufactured by PRECI CO., LTD. to obtain frozen bodies as an intermediate, which were then vacuum-dried to obtain cellulose particles, which were taken as Test Example 2. For drying in a stationary state, the frozen bodies were vacuum dried in a vacuum dryer (EYELA FDU-2110 manufactured by TOKYO RIKAKIKAI CO., LTD.) with the frozen bodies kept stationary.

<Test Example 3>

Production in Test Example 3 was as follows. Unmodified fine cellulose fibers (ELLEX(registered trademark)-S manufactured by DAIO PAPER CORPORATION) as used in Test Example 1 and a citric acid ester were mixed at a mixing ratio of 75% : 25% to obtain a mixture, which was dispersed at a 2 mass% concentration in water to obtain dispersion liquid. This dispersion liquid as a raw material was subjected to the freezing treatment in Cryochamber CS30 manufactured by PRECI CO., LTD., and the resulting frozen bodies were dried in Barrel freeze-drying unit TFD-10 manufactured by PRECI CO., LTD. while swinging, until completely dried. The cellulose particles obtained from the drying were taken as Test Example 3.

<Test Example 4>

Production in Test Example 4 was as follows. Dispersion liquid of fine cellulose fibers of which hydroxyl groups had been modified into phosphorous ester groups (ELLEX(registered trademark)-star manufactured by DAIO PAPER CORPORATION) at a 0.5 mass% concentration in water as a raw material was subjected to the freezing treatment in Cryochamber CS30 manufactured by PRECI CO., LTD., and the resulting frozen bodies were dried in Barrel freeze-drying unit TFD-10 manufactured by PRECI CO., LTD. while swinging, until completely dried. The cellulose particles obtained from the drying were taken as Test Example 4. The fine cellulose fibers had an average fiber diameter of 4 nm.

<Test Example 5>

Production in Test Example 5 was as follows. The same dispersion liquid as used in Test Example 4 was supplied as a raw material to Cryochamber CS30 manufactured by PRECI CO., LTD., and the resulting frozen bodies as an intermediate were vacuum dried to obtain cellulose particles, which were taken as Test Example 5. For drying in a stationary state, the frozen bodies were vacuum dried in a vacuum dryer (EYELA FDU-2110 manufactured by TOKYO RIKAKIKAI CO., LTD.) with the frozen bodies kept stationary.

<Comparative Example 1>

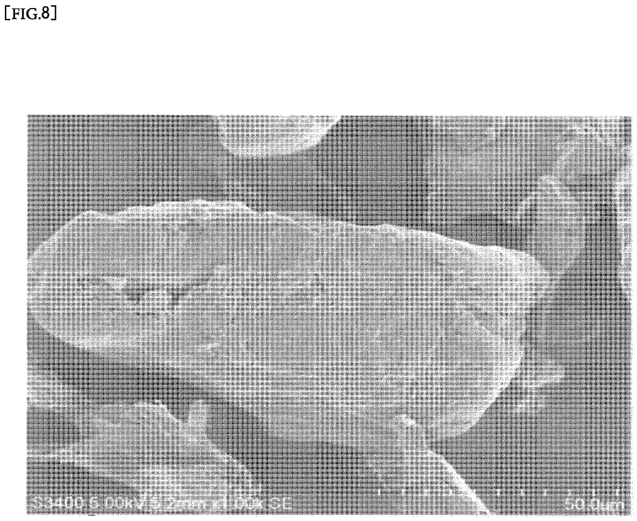

Production in Comparative Example 1 was as follows. Unmodified fine cellulose fibers (ELLEX(registered trademark)-S manufactured by DAIO PAPER CORPORATION) and glycerin (glycerin manufactured by FUJIFILM WAKO PURE CHEMICAL CORPORATION) were mixed at a mixing ratio of 71%: 29% to obtain a mixture, and the mixture liquid was supplied to a drum dryer to obtain a dried product through thermal drying, which was ground into cellulose particles having an average particle size of 53.1 μm, which was taken as Comparative Example 1. A SEM image of the particles of Comparative Example 1 is shown in Fig. 8. The particles of Comparative Example 1, compared to the cellulose particles of the present embodiment, were solid inside, and had a smaller specific surface area and a higher density.

<Comparative Example 2>

In Comparative Example 2, cellulose particles were produced in the same way as in Comparative Example 1, except that the cellulose particles had an average particle size of 238.8 μm.

<Comparative Example 3>

Production in Comparative Example 3 was as follows. An aqueous dispersion of unmodified fine cellulose fibers (ELLEX(registered trademark)-S manufactured by DAIO PAPER CORPORATION) at a 2 mass% concentration was taken as Comparative Example 3.

<Comparative Example 4>

Production in Comparative Example 4 was as follows. An aqueous dispersion of fine cellulose fibers of which hydroxyl groups had been modified into phosphorous ester groups (ELLEX(registered trademark)-star manufactured by DAIO PAPER CORPORATION) at a 0.5 mass% concentration was taken as Comparative Example 4 (the aqueous dispersions in Comparative Examples 3 and 4 are the aqueous dispersions of the fine cellulose fiber before being processed into the cellulose particles).

Physical properties of the products in Test Examples and Comparative Examples were determined. The physical properties determined were compressibility, loose bulk density, packed bulk density, specific surface area, moisture percentage, average particle size, median size, 10% cumulative diameter, and 90% cumulative diameter.

Compressibility is among the items used for calculation of Carr indices for fluidity, and was determined in accordance with ASTM D6393-99 "Measurement of Compressibility". The measurement was made using "Multiple Powder Characteristics Analyzer Multi Tester MT-02" manufactured by SEISHIN ENTERPRISE CO., LTD.

The specific surface area was determined in accordance with the BET multipoint method ($N_2$ adsorption BET method). The instruments used for the measurements were 3Flex manufactured by MICROMERITICS and Smart VacPrep (pretreatment system) manufactured by MICROMERITICS. The cellulose particles prepared in Test Examples and Comparative Examples were subjected to degassing treatment (drying under reduced pressure) in the pretreatment system at 60 °C for 20 hours, and then to the measurements of the specific surface area by the $N_2$ adsorption BET method.

The apparatus used for the determination of the average particle size, median size, 10% cumulative diameter, and 90% cumulative diameter was Laser Scattering Particle Size Distribution Analyzer LA-960V2 (dry method) manufactured by HORIBA LTD.

The compositions of the raw materials in Test Examples and Comparative Examples are shown in Table 1, and the physical properties are shown in Table 2.

Table 1

| Composition of Raw Material (%) | Test Ex. 1 | Test Ex. 2 | Test Ex. 3 | Test Ex. 4 | Test Ex. 5 | Comp. Ex. 1 | Comp. Ex. 2 | Comp. Ex. 3 | Comp. Ex. 4 |
|---|---|---|---|---|---|---|---|---|---|
| Unmodified CNF | 100 | 100 | 75 | - | - | 71 | 71 | 100 | - |
| Modified CNF | - | - | - | 100 | 100 | - | - | - | 100 |
| Glycerin | - | - | - | - | - | 29 | 29 | - | - |
| Citric Acid Ester | - | - | 25 | - | - | - | - | - | - |

Table 2

| | | Test Ex. 1 | Test Ex. 2 | Test Ex. 3 | Test Ex. 4 | Test Ex. 5 | Comp. Ex. 1 | Comp. Ex. 2 |
|---|---|---|---|---|---|---|---|---|
| Compressibility | | 29% | 9% | 28% | 38% | 20% | 46% | 27% |
| Loose Bulk Density | mg/cm$^3$ | 48.0 | 100 | 28.0 | 35.0 | 4.0 | 226.0 | 245.0 |
| Packed Bulk Density | mg/cm$^3$ | 68.0 | 11.0 | 39.0 | 56.0 | 5.0 | 419.0 | 337.0 |
| Specific Surface Area | m$^2$/g | 45.8 | 70.2 | 48.7 | 52.7 | 131.0 | 1.0 | 0.4 |
| Moisture Percentage | % | 6.3% | 7.2% | 7.8% | 11.8% | 20.8% | 6.3% | 6.5% |
| Average Particle Size | μm | 160.8 | 386.3 | 220.4 | 224.8 | 355.3 | 53.1 | 238.8 |
| Median Size | μm | 82.6 | 258.0 | 114.0 | 127.5 | 251.6 | 47.6 | 219.8 |
| 10% Cumulative Diameter | μm | 31.2 | 61.1 | 37.8 | 36.0 | 51.2 | 22.3 | 87.1 |
| 90% Cumulative Diameter | μm | 405.9 | 909.5 | 578.2 | 571.5 | 820.9 | 88.3 | 409.8 |

<Tests of Viscosity and others>

The cellulose particles prepared in each of Text Examples and Comparative Examples were respectively placed in water at a concentration shown in Table 3 (redispersion concentration), and dispersed using a homogenizer at 8000 rpm for 1 minute to obtain redispersion liquid. The homogenizer used was T-25 manufactured by IKA.

Each redispersion liquid was subjected to two measurements of B-type viscosity under different conditions. The first measurement determines the B-type viscosity at a water temperature of 25 °C at 6 rpm, and the second measurement determines the B-type viscosity at a water temperature of 25 °C at 60 rpm. The Ti value was determined as follows:

Ti Value = (B-type Viscosity measured at 25 °C at 6 rpm) / (B-type Viscosity measured at 25 °C at 60 rpm)

The percentage of viscosity change (6 rpm) was determined by Formula 2, and the percentage of viscosity change (60 rpm) was determined by Formula 3.

```
[Formula 2]

1. For Test Examples 1 to 3 and Comparative Examples 1 and

2

(Percentage of Viscosity Change (6 rpm)) = (B-type

Viscosity of X (6 rpm)) / (B-type Viscosity of Comparative

Example 3 (6 rpm)) × 100
```

wherein X is one of Test Example 1, Test Example 2, Test Example 3, Comparative Example 1, and Comparative Example 2.

2. For Test Examples 4 and 5 (Percentage of Viscosity Change (6 rpm)) = (B-type Viscosity of Y (6 rpm)) / (B-type Viscosity of Comparative Example 4 (6 rpm)) × 100 wherein Y is Test Example 4 or 5.

```
[Formula 3]

1. For Test Examples 1 to 3 and Comparative Examples 1 and

2

(Percentage of Viscosity Change (60 rpm)) = (B-type

Viscosity of X (60 rpm)) / (B-type Viscosity of Comparative

Example 3 (60 rpm)) × 100
```

wherein X is one of Test Example 1, Test Example 2, Test Example 3, Comparative Example 1, and Comparative Example 2.

2. For Test Examples 4 and 5 (Percentage of Viscosity Change (60 rpm)) = (B-type Viscosity of Y (60 rpm)) / (B-type Viscosity of Comparative Example 4 (60 rpm)) × 100 wherein Y is Test Example 4 or 5.

The percentage of viscosity change (average) is obtained by dividing the sum of the percentage of viscosity change (6 rpm) and the percentage of viscosity change (60 rpm) by 2.

Table 3

| | | Test Ex. 1 | Test Ex. 2 | Test Ex. 3 | Test Ex. 4 | Test Ex. 5 | Comp. Ex. 1 | Comp. Ex. 2 | Comp. Ex. 3 | Comp. Ex. 4 |
|---|---|---|---|---|---|---|---|---|---|---|
| Redispersion Concentration | mass% | 2 | 2 | 2 | 0.5 | 0.5 | 2 | 2 | - | - |
| B-type Viscosity at25 °C at6 rpm | cps | 2,450 | 2,250 | 2,500 | 2,790 | 3,360 | 0 | 0 | 2590 | 6160 |
| B-type Viscosity at25 °C at60 rpm | cps | 435 | 512 | 468 | 478 | 414 | 3.5 | 2.9 | 534 | 1049 |
| TiValue | | 5.6 | 4.4 | 5.3 | 5.8 | 8.1 | 0.0 | 0.0 | 4.9 | 5.9 |
| Percentage of Viscosity Change (6 rpm ) | % | 94.6% | 86.9% | 96.5% | 45.3% | 54.5% | 00% | 00% | - | - |
| Percentage of Viscosity Change (60 rpm ) | % | 81.5% | 95.9% | 87.6% | 45.6% | 39.5% | 0.7% | 0.5% | - | - |
| Percentage of Viscosity Change (Average) | % | 88.0% | 91.4% | 92.1% | 45.4% | 47.0% | 0.3% | 0.3% | - | - |

Comparing the B-type viscosities (6 rpm), higher values were achieved in Test Examples 1 to 5 compared to the values in Comparative Examples 1 and 2. This applies also to the B-type viscosity (60 rpm). Comparing the Ti-values, higher values were achieved in Test Examples 1 to 5 compared to the values in Comparative Examples 1 and 2. It was demonstrated that superior thixotropy was achieved in Test Examples 1 to 5.

The percentage of viscosity change is a numerical expression of a B-type viscosity of cellulose particles produced from fine cellulose fibers as a raw material with respect to a B-type viscosity of the raw material fine cellulose fibers being 100%. A percentage of viscosity change closer to 100% indicates that the B-type viscosity of the cellulose particles is closer to the B-type viscosity of the raw material fine cellulose fibers, whereas a percentage of viscosity change closer to 0% indicates that the B-type viscosity of the cellulose particles is far from the B-type viscosity of the raw material fine cellulose fibers.

<Redispersion Test>

The following redispersion test was conducted. In the relevant figures, reference numeral 20 refers to the interface.

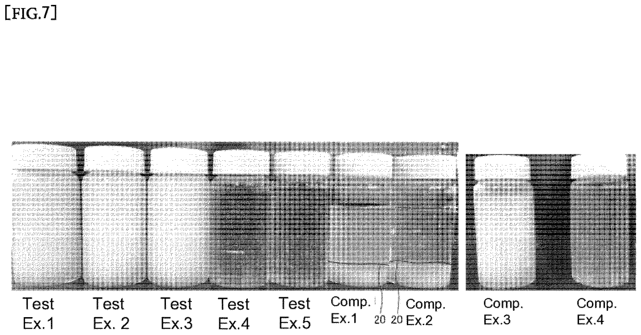

The cellulose particles produced in Test Examples 1 to 3 and Comparative Examples 1 and 2 were dispersed in water at a concentration of 2.0 mass%, whereas the cellulose particles produced in Test Examples 4 and 5 were dispersed in water at a concentration of 0.5 mass%, followed by dispersion using a homogenizer (T-25 manufactured by IKA) at 8000 rpm for 1 minute to obtain redispersion liquid (wherein the aqueous dispersion of Comparative Example 3 was a 2.0 mass% aqueous dispersion of fine cellulose fibers, and the aqueous dispersion of Comparative Example 4 was a 0.5 mass% aqueous dispersion of fine cellulose fibers, and both correspond to the aqueous dispersions before being processed into the cellulose fibers). The dispersion liquids, after being prepared, were respectively transferred into capped bottles and left to stand for 20 minutes. Images of the dispersion liquids at this point of time are shown in Fig. 7.

In all of Test Examples 1 to 5, the cellulose particles were widely dispersed in the water, and no clear interface of the cellulose particles was observed. The redispersion liquids of Test Examples 4 and 5 were highly transparent, as the fine cellulose fibers used were highly transparent. On the other hand, in Comparative Examples 1 and 2, interfaces 20 were observed.

In Test Examples 4 and 5, the materials dispersed in the water took on a transparent color. This may be explained as follows. In Test Examples 4 and 5, fine cellulose fibers having high hydrophilicity and high transparency were used as the raw material. When the cellulose particles were dispersed in water, the water permeated among the fibers constituting the cellulose particles to cause dissociation of the hydrogen bonding among the fibers, which results in the fibers redispersed in the dispersion medium with an extremely high dispersibility. This assumed to be the reason for the transparent color observed in Test Examples 4 and 5. In Comparative Example 3, the material dispersed in water was hard to be precipitated.

<Miscellaneous>

The tests and measurements according to JIS, TAPPI, and others described herein were conducted at room temperature, particularly 25 °C, in atmospheric pressure, particularly 1 atm, unless otherwise specified.

INDUSTRIAL APPLICABILITY

According to the present invention, there are provided the cellulose particles with improved redispersibility in aqueous liquid, and the dispersion liquid of the cellulose particles.

DESCRIPTION OF REFERENCE SIGNS

11: cellulose particle
11a: pore in cellulose particle
12: cellulose particle
12a: pore in cellulose particle
20: interface

**Claims**

1. Cellulose particles comprising 50 mass% or more fine cellulose fibers having an average fiber diameter of 1000 nm or smaller,
   wherein the cellulose particles have a packed bulk density of 0.1 to 200 mg/cm$^3$ and an average particle size of 0.1 to 1000 $\mu$m.

2. The cellulose particles according to claim 1, having a specific surface area of 20 m$^2$/g or larger.

3. The cellulose particles according to claim 1, further comprising one or more members selected from the group consisting of polyhydric alcohols, polysaccharides, and water-soluble high polymers.

4. The cellulose particles according to claim 1, wherein the cellulose particles are porous.

5. The cellulose particles according to claim 1, wherein inorganic fine particles are contained in the fine cellulose fibers.

6. The cellulose particles according to claim 1, wherein a degree of crystallinity of the fine cellulose fibers is 50 or higher and 100 or lower.

7. Dispersion liquid of the cellulose particles of any one of claims 1 to 4, having a B-type viscosity of 1000 cps to 30000 cps when a concentration of the cellulose particles dispersed therein is 2%,
   wherein the B-type viscosity is determined in accordance with JIS-Z8803 (2011) "Methods for Viscosity Measurement of Liquid" at 25 °C at 6 rpm.

8. The dispersion liquid of the cellulose particles according to claim 7, having a Ti value of 2 or more.

[FIG.1]

[FIG.2]

EP 4 442 737 A1

[FIG.3]

20

[FIG.4]

[FIG.5]

[FIG.6]

[FIG.7]

| Test Ex.1 | Test Ex. 2 | Test Ex.3 | Test Ex.4 | Test Ex.5 | Comp. Ex.1 | Comp. Ex.2 | Comp. Ex.3 | Comp. Ex.4 |

[FIG.8]

[FIG.9]

[FIG.10]

| | INTERNATIONAL SEARCH REPORT | International application No. |
|---|---|---|
| | | **PCT/JP2022/034319** |

**A. CLASSIFICATION OF SUBJECT MATTER**

*C08J 3/16*(2006.01)i; *C08B 16/00*(2006.01)i; *C08J 3/02*(2006.01)i
FI: C08J3/16 CEP; C08J3/02 A; C08B16/00

According to International Patent Classification (IPC) or to both national classification and IPC

**B. FIELDS SEARCHED**

Minimum documentation searched (classification system followed by classification symbols)

C08J3/16; C08B16/00; C08J3/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2021-169579 A (ASAHI KASEI CORP.) 28 October 2021 (2021-10-28)<br>whole document | 1-10 |
| A | WO 2017/141779 A1 (STARLITE CO., LTD.) 24 August 2017 (2017-08-24)<br>whole document | 1-10 |
| A | WO 2020/059859 A1 (NIPPON PAPER INDUSTRIES CO., LTD.) 26 March 2020<br>(2020-03-26)<br>whole document | 1-10 |
| A | WO 2020/201900 A1 (NEXTMATERIALS S.R.L.) 08 October 2020 (2020-10-08)<br>whole document | 1-10 |
| A | JP 2018-118917 A (DAICEL CORP.) 02 August 2018 (2018-08-02)<br>whole document | 1-10 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT

Information on patent family members

International application No.

**PCT/JP2022/034319**

| Patent document cited in search report | | | Publication date (day/month/year) | Patent family member(s) | | | Publication date (day/month/year) |
|---|---|---|---|---|---|---|---|
| JP | 2021-169579 | A | 28 October 2021 | (Family: none) | | | |
| WO | 2017/141779 | A1 | 24 August 2017 | US whole document CN | 2021/0024722 108779256 | A1 A | |
| WO | 2020/059859 | A1 | 26 March 2020 | WO whole document | 2020/059860 | A1 | |
| WO | 2020/201900 | A1 | 08 October 2020 | (Family: none) | | | |
| JP | 2018-118917 | A | 02 August 2018 | (Family: none) | | | |

Form PCT/ISA/210 (patent family annex) (January 2015)

**EP 4 442 737 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017210596 A
- JP 2019206662 A
- JP 2020050840 A
- JP 2019199671 A

### Non-patent literature cited in the description

- General Rules for X-ray Diffraction Analysis. *X-ray diffraction in accordance with JIS K0131,* 1996
- Methods for Viscosity Measurement of Liquid. *JIS-Z8803,* 2011